# EUROPÄISCHE PATENTSCHRIFT

(11) **EP 2 191 338 B1**
(45) Veröffentlichungstag und Bekanntmachung des Hinweises auf die Patenterteilung: **01.02.2012**
(21) Anmeldenummer: 07801714.2
(22) Anmeldetag: 16.08.2007
(51) Int. Cl.: G05B 19/418, G05B 17/02, G05B 19/042, G05B 19/05, G06F 9/455, G06G 7/66

(54) **SYSTEM ZUR ERSTELLUNG EINES SIMULATIONSPROGRAMMS**
SYSTEM FOR WRITING A SIMULATION PROGRAM
SYSTÈME D'ÉTABLISSEMENT D'UN PROGRAMME DE SIMULATION

(43) Veröffentlichungstag der Anmeldung: 02.06.2010
(73) Patentinhaber: Siemens Aktiengesellschaft, 80333 München (DE)
(72) Erfinder: PLEWINSKI, Nicolai, 90552 Röthenbach (DE); STOLPER, Thilo, 90402 Nürnberg (DE)
(86) Internationale Anmeldenummer: PCT/EP2007/007263
(87) Internationale Veröffentlichungsnummer: WO 2009/021541

(56) Entgegenhaltungen:
- EP-A- 1 265 333
- WO-A-02/079974
- US-A1- 2007 088 533

## Beschreibung

Die Erfindung betrifft ein System zur Erstellung eines Simulationsprogramms zur Simulation einer automatisierungstechnischen Anlage.

Automatisierte prozess- oder fertigungstechnische Anlagen sind heute sehr komplex aufgebaut und bestehen aus einer Vielzahl miteinander interagierender Komponenten. Unter Komponenten einer Automatisierungsanlage sollen hier sowie im gesamten Dokument alle am automatisierten Prozess teilnehmenden Komponenten verstanden werden. So gehören die am Automatisierungsprozess beteiligten Sensoren und Aktoren zu den in diesem Sinne zu verstehenden Anlagenkomponenten. Darüber hinaus werden aber auch von einer derartigen Automatisierungsanlage bearbeitete Werkstücke als Anlagenkomponenten verstanden. EP1265 333 A1 zeigt ein Verfahren und ein System zur automatische konfiguration eines Teils eines elektrischen Energie verteilnetzes.

Aufgrund der Vielzahl und der Komplexität der an einem Automatisierungsprozess beteiligten Komponenten weist auch die zur Steuerung der Komponenten vorgesehene Software in der Regel einen sehr hohen Komplexibilitätsgrad auf. Hieraus erwächst schließlich das Bestreben, bei Neuentwicklungen von Anlagen oder prozessbedingten Modifikationen bestehender Anlagen die Steuerungssoftware vor der Inbetriebnahme der Anlage testen zu können. Dies geschieht in der Regel dadurch, dass die Automatisierungsanlage und die realen Steuerungen mit der zu testenden Software simuliert werden. Neben einer erheblichen Kosten- und Zeitersparnis bringt dies den Vorteil, dass bei einer Neuentwicklung einer Automatisierungsanlage diese noch nicht existieren muss, wenn die Steuerungssoftware entwickelt ist und getestet werden soll. Mit Hilfe eines Rechners werden die mechatronischen Komponenten der Automatisierungsanlage simuliert und auf diese Art und Weise sinnvolle Eingangssignale zu den vom Steuerungsprogramm generierten Ausgangssignalen erzeugt.

Übliche Simulationsprogramme stellen in der Regel Verhaltensmodelle zur Verfügung, mit denen das Verhalten einzelner Anlagenkomponenten nachgebildet werden kann. Mit Hilfe dieser Verhaltensmodelle ist es möglich, abhängig von vorgegebenen Eingangswerten, die in der Regel von den Modellen anderer am Automatisierungsprozess beteiligten Komponenten erzeugt werden, Ausgangswerte zu berechnen und diese wiederum anderen Komponenten der Automatisierungsanlage bzw. deren Verhaltensmodellen als Eingangswert zur Verfügung zu stellen. In einer graphischen Oberfläche eines derartigen Simulationsprogramms werden die einzelnen realen Anlagenkomponenten daher in der Regel durch graphische Symbole repräsentiert, die Ein- und Ausgänge aufweisen, welcher mit entsprechenden Ein- und Ausgangswerten belegt werden können. Um nun eine automatisierungstechnische Anlage mit vielen einzelnen Komponenten zu simulieren, wird der Benutzer die graphischen Objekte, die den jeweiligen Komponenten zugeordnet sind, über die Ein- und Ausgänge miteinander verbinden, um so den Informationsfluss innerhalb der realen Anlage nachzubilden. Je komplexer die zu modulierende automatisierungstechnische Anlage ist, desto schwieriger und fehleranfälliger wird die Generierung eines Simulationsmodells für die komplette automatisierungstechnische Anlage.

Der Erfindung liegt die Aufgabe zugrunde, die Erstellung eines Simulationsprogramms für eine komplexe automatisierungstechnische Anlage zu erleichtern.

Diese Aufgabe wird durch ein System zur Erstellung eines Simulationsprogramms zur Simulation einer Automatisierungsanlage gelöst mit den Merkmalen des Patentanspruchs 1.

Der Erfindung liegt die Erkenntnis zugrunde, dass die Verschaltung der Ein- und Ausgabe der Graphikobjekte, die in einer Simulationsumgebung die realen Komponenten der Anlage repräsentieren, erheblich vereinfacht bzw. sogar automatisiert werden kann, wenn die miteinander zu verschaltenden Ports durch geeignete Metainformationen hinreichend charakterisiert werden.

Erfindungsgemäß wird einer Komponente der Automatisierungsanlage ein Ressourcenobjekt zugeordnet, wobei jedem dieser Ressourcenobjekte besagte Metainformationen in Form der Portdaten zugeordnet sind. Die einem Ressourcenobjekt zugeordneten Portdaten werden für jeden Port des Ressourcenobjektes angelegt und kennzeichnen die über den jeweiligen Port austauschbaren Daten. Eine solche Kennzeichnung geht deutlich über die reine Definition eines zulässigen Datentyps hinaus, denn sie soll eine automatische Zuordnung von miteinander kompatiblen Ein- und Ausgängen verschiedener Ressourcenobjekte ermöglichen. Das System umfasst entsprechende Mittel, mit denen anhand der Portdaten die zum Werteaustausch zu verbindenden Ports ermittelt werden können. Auf diese Art und Weise entfällt ein händisches "Verdrahten" der Ein- und Ausgänge dieser Verhaltensmodellpräsentationen.

Darüber hinaus enthält jedes Ressourcenobjekt ein Programmfragment, in dem der Code abgespeichert ist, der die dem Ressourcenobjekt zugehörige Anlagenkomponente bzw. deren Verhalten nachbildet, sofern dieser Code mit einem geeigneten Simulationsprogramm ausgeführt wird.

Erfindungsgemäß wird, sobald die zum gegenseitigen Austausch von Werten vorgesehenen Ports identifiziert wurden eine Variable definiert, auf die die identifizierten Ports Zugriff haben und die von diesen Ports mit Werten belegt werden kann. Darüber hinaus können die entsprechenden Ports natürlich auch Werte aus dieser Variablen zur Ausführungen ihrer Programmfragmente auslesen.

Schließlich wird das Simulationsprogramm, welches zur Simulation der kompletten Automatisierungsanlage geeignet ist, dadurch generiert bzw. erweitert, dass die den identifizierten Ressourcenobjekten zugeordneten Programmfragmente zu einem gemeinsamen Programm verschmolzen werden. Innerhalb dieses Programms kann schließlich die zuvor definierte Variable von den Programmfragmenten belegt bzw. ausgelesen werden. Eine innerhalb der Programmfragmente definierte lokale Variable wird hierzu auf die erfindungsgemäß definierte Variable gemapt.

Das erfindungsgemäße System bietet dem Anwender den Vorteil, dass er Verhaltensmodelle einzelner Anlagenkomponenten isoliert voneinander definieren kann und bei deren Verschaltung zum Gesamtmodell der Automatisierungsanlage vom System erheblich unterstützt wird. Dies wird dadurch ermöglicht, dass dem Anwender die Möglichkeit gegeben wird, die Ports der einzelnen Ressourcenobjekte mit entsprechenden Metadaten, den Portdaten, so zu beschreiben, dass das System durch Auswertung dieser Portdaten in der Lage ist, die korrekte Verschaltung der einzelnen Ressourcenobjekte autark durchzuführen. Hieraus resultiert auch eine sehr viel übersichtlichere Darstellung des Anlagenmodells insbesondere bei sehr komplex aufgebauten Automatisierungsanlagen als es aus dem Stand der Technik bekannt ist, bei dem graphische Objekte an ihren Ein- und Ausgängen in einer einzigen Darstellung miteinander verdrahtet werden.

Für die zum Werteaustausch vorgesehene Variable existieren verschiedene programmierte technische Realisierungsmöglichkeiten. So kann in einer ersten vorteilhaften Ausführungsform der Erfindung die Variable eine globale Variable sein.

Insbesondere dann, wenn eine Vielzahl gleichartiger Komponenten innerhalb der Automatisierungsanlage vorgesehen ist, ist eine Ausführungsform der Erfindung besonders vorteilhaft, bei der die Variable ein global definiertes Array ist. Hierbei können Ein- oder Ausgänge verschiedener Instanzen eines Ressourcenobjektes desselben Typs mit verschiedenen Einträgen ein und desselben Arrays verknüpft werden.

Anstelle einer globalen Variablen kann in weiterer vorteilhafter Ausgestaltung die Variablen auch ein Pointer sein.

Auch hier kann in weiterer vorteilhafter Ausgestaltung insbesondere im Falle mehrerer Ressourcenobjekte des gleichen Typs die Variable eine Liste sein.

Um die Abbildung der in den einzelnen Programmfragmenten belegten oder eingelesenen Werten lokal definierter Variablen auf die zum Werteaustausch vorgesehenen Variablen in einer eindeutigen Weise zu ermöglichen, umfasst in weiterer vorteilhafter Ausgestaltung der Erfindung das System Mittel zur automatischen Vergaben einer eindeutig Bezeichnung für die Variable, die derart gestaltet ist, dass sie das Ressourcenobjekt kennzeichnet, dass die Variable mit Werten belegt und den Port kennzeichnet, an dem Ressourcenobjekt den Wert ausgibt.

Die automatische Ermittlung der miteinander zu verschaltenden Ein- und Ausgänge wird in einer vorteilhaften Ausführungsform der Erfindung dadurch erleichtert, dass die Portdaten den jeweiligen zugehörigen Port als Eingansport oder Ausgangsport kennzeichnen.

Eine Plausibilitätskontrolle für eine Überprüfung miteinander verschalteter Ressourcenobjekte kann dadurch ermöglicht werden, dass in weiterer vorteilhafter Ausgestaltung die Portdaten die maximale Anzahl weiterer Ports kennzeichnen, mit denen ein den Portdaten zugehöriger Port Werte austauschen kann. Hierzu kann beispielsweise eine Kardinalzahl als Metadatum eingeführt werden.

Durch die automatisierte Verschaltung der einzelnen Ressourcenobjekte wird eine Ausführungsform der Erfindung ermöglicht, bei der das System Mittel zur Instanziierung der Ressourcenobjekte aufweist, die eine Bildung von Instanzen der Ressourcenobjekte zur Laufzeit des Simulationsprogramms ermöglichen. Ein Benutzer kann also neue Ressourcenobjekte dynamisch instanziieren und somit eine Simulation während ihres Ablaufs beeinflussen. Beispielsweise kann während einer Simulation von einer Förderanlage, die Werkstücke transportiert, die Anzahl der Werkstücke durch Instanzbildung erhöht werden.

Eine hohe Datenkonsistenz wird bei der Projektierung und der Simulation eines Automatisierungssystems dadurch ermöglicht, dass in weiterer vorteilhafter Ausgestaltung das System als Engineeringsystem ausgeführt ist.

Im Folgenden wird die Erfindung anhand der in den Figuren dargestellten Ausführungsbeispiele näher beschrieben und erläutert.

Es zeigen:
- FIG 1: eine schematische Darstellung eines ersten in einem Engineeringsystem definierten Ressourcenobjektes, das einer ersten Komponente einer zu simulierenden Automatisierungsanlage zugeordnet ist,
- FIG 2: eine schematische Darstellung eines zweiten in dem Engineeringsystem definierten Ressourcenobjektes, das einer zweiten Komponente der zu simulierenden Automatisierungsanlage zugeordnet ist,
- FIG 3: eine Prinzipdarstellung eines Simulationsprogramms zur Simulation der ersten und zweiten Komponente,
- FIG 4: eine schematische Darstellung eines dritten in dem Engineeringsystem definierten Ressourcenobjektes, das einer dritten Komponente der zu simulierenden Automatisierungsanlage zugeordnet ist,
- FIG 5: eine schematische Darstellung eines vierten in dem Engineeringsystem definierten Ressourcenobjektes, das eine vierten Komponente der zu simulierenden Automatisierungsanlage zugeordnet ist und
- FIG 6: eine Prinzipdarstellung eines weiteren Simulationsprogramms zur Simulation der dritten und vierten Komponente.

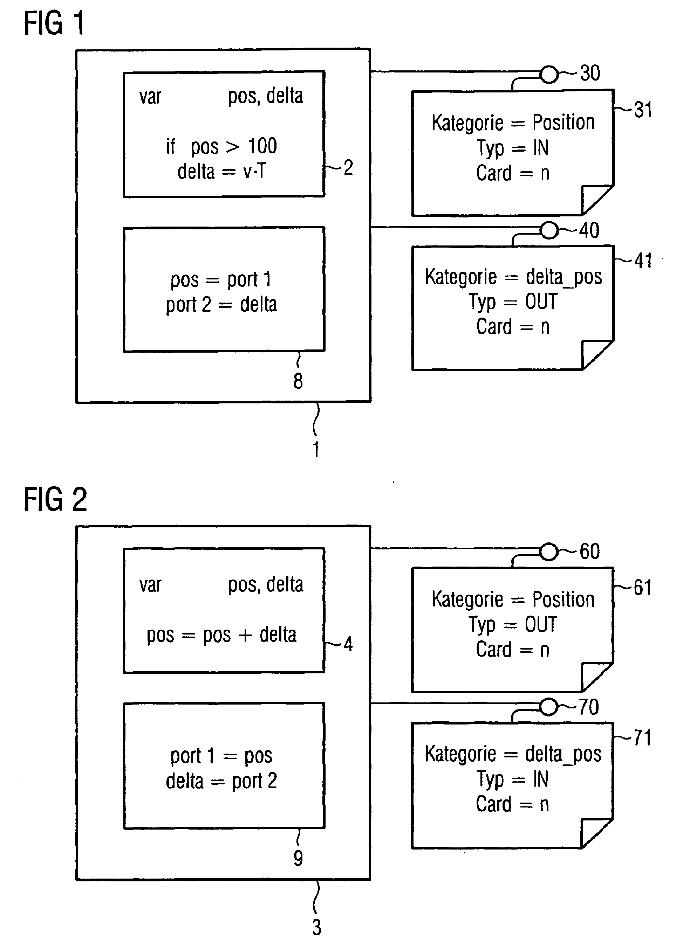

Im Folgenden soll anhand der Figuren 1,2 und 3 ein sehr einfaches Beispiel dargestellt werden, welches die erfindungsgemäße automatische Verschaltung zweier Ressourcenobjekte zur Erzeugung eines Simulationsprogramms veranschaulicht.

FIG 1 zeigt eine schematische Darstellung eines ersten in einem Engineeringsystem definierten Ressourcenobjektes 1, das eine erste Komponente einer zu simulierenden Automatisierungsanlage zugeordnet ist. Das Ressourcenobjekt 1 umfasst zwei Ports 30, 40, über die Daten mit anderen Ressourcenobjekten ausgetauscht werden können und die in FIG 1 schematisch als Pins dargestellt sind.

Darüber hinaus ist dem Ressourcenobjekt 1 ein Programmfragment 2 zugeordnet. Das Programmfragment 2 besteht aus Computerprogrammcode, mit dem das Verhalten der dem Ressourcenobjekt 1 zugeordneten Automatisierungskomponente beim Ablauf in einem Simulationsprogramm nachgebildet werden kann.

Das Ressourcenobjekt 1 ist einem Förderband der Automatisierungsanlage zugeordnet. Ein Anwender des Engineeringsystems weist dem Ressourcenobjekt 1 daher auch den Namen "Förderband" zu. Aufgabe des realen Förderbandes ist es, Werkstücke zu transportieren. Das Programmfragment 2 beschreibt nun das Verhalten des Förderbandes dahingehend, dass es für ein Werkstück, das sich an einer bestimmten Position befindet, eine Weglänge delta berechnet, die dieses Werkstück innerhalb eines Zeitintervalls T durchläuft, wenn das Förderband mit der Geschwindigkeit v läuft. Hierbei ist angenommen, dass das besagte Werkstück nur dann von dem Förderband bewegt wird, wenn die Position pos des Werkstücks einen Wert größer als 100 annimmt. Dieses Verhalten ist innerhalb des Programmfragmentes 2 in Form einer Istanweisung definiert. Innerhalb des Programmfragmentes 2 werden die lokalen Variablen pos und delta verwendet, die die Position und die Weglänge beschreiben. Die Geschwindigkeit v des Förderbandes und das Zeitintervall T sind vorbelegte statische Parameter, die sich zur Laufzeit des Programmfragmentes 2 nicht ändern.

Darüber hinaus umfasst das erste Ressourcenobjekt 1 ein erstes Zuweisungsfenster 8. Innerhalb dieses Zuweisungsfensters 8 werden die lokalen Variablen pos und delta mit den an den Ports 30, 40 des Ressourcenobjektes 1 anliegenden Werten verknüpft. So wird die lokale Variable pos mit dem Wert am Port 1 30 belegt. Die Position des Werkstücks wird somit am Port 1 30 eingelesen. Nachdem nun mit diesem Wert die zurückgelegte Wegstrecke delta berechnet wurde, wird in einem ersten Zuweisungsfenster 8 dem zweiten Port 40 (Port 2) der Wert der Variablen delta zugewiesen.

Aus der Beschreibung des Programmfragmentes 2 und den Zuweisungen geht klar hervor, dass der erste Port 30 einen Eingang des ersten Ressourcenobjektes 1 darstellt und der zweite Port 40 einen Ausgang.

Die Besonderheit des in FIG 1 dargestellten ersten Ressourcenobjekts 1 liegt nun darin, dass eine Menge erster und zweiter Positionsdaten 31, 41 vorgesehen ist, die Eigenschaften der zugehörigen Ports 30, 40 bzw. der an diesen Ports auszutauschenden Werte kennzeichnen. So ist für jeden dieser Ports 30,40 eine Kategorie angegeben, anhand der die Ports 30,40 bezüglich einer insbesondere benutzerdefinierten Kategoriesierung eingeordnet werden können. Darüber hinaus wird der Typ des zugehörigen Ports 30, 40 bezüglich Ein- oder Ausgang gekennzeichnet. Weiterhin ist für jeden Port 30, 40 eine Kardinalzahl card angegeben. Die Kardinalzahl legt fest, mit wie viel weiteren Ports der zugehörige Port zwecks Werteaustausch verbunden werden kann.

Basierend auf diesen Portdaten 31, 41 und Portdaten weiterer Ressourcenobjekte, die weitere Komponenten der Automatisierungsanlage bezüglich ihres Verhaltens beschreiben, kann nun das Engineeringsystem eine automatische Verknüpfung der Ports durchführen und somit die Datenflusswege automatisch definieren.

FIG 2 zeigt eine schematische Darstellung eines zweiten in dem Engineeringsystem definierten Ressourcenobjektes 3, das einer zweiten Komponente der zu simulierenden Automatisierungsanlage zugeordnet ist. Dieses Ressourcenobjekt 3 ist einem auf dem Förderband zu transportierenden Werkstück zugeordnet und soll sein Verhalten innerhalb einer Simulation beschreiben. Hierzu umfasst das zweite Ressourcenobjekt 3 ein zweites Programmfragment 4, welches Computerprogrammcode enthält, mit dem das Verhalten des Werkstücks innerhalb des Simulationsprogramms nachgebildet werden kann. Dieses Programmfragment 4 berechnet die aktuelle Position pos des Werkstücks anhand der Wegstreckenänderung delta, die es an einem seiner Ports 60, 70 einliest. Innerhalb des zweiten Programmfragmentes 4 sind daher zwei lokale Variablen pos und delta definiert, die mit entsprechenden Werten belegt werden können.

In einem zweiten Zuweisungsfenster 9 werden schließlich die Verknüpfungen zwischen den lokalen Variablen pos und delta und den Ports 60,70 des zweiten Ressourcenobjektes 3 definiert. So wird die mit dem zweiten Programmfragment 4 berechnete neue Position pos dem Port 1 zugewiesen. Die lokale Variable delta, die für die Berechnung benötigt wird, wird am Port 72 eingelesen.

Den Ports 60, 70 sind auch hier Portdaten 61, 71 zugeordnet, die die Eigenschaften der zugehörigen Ports 60, 70 bzw. der an diesen Ports 60, 70 auszutauschenden Werte kennzeichnen. Auch hier werden wiederum die Meterdatenkategorie, Typ und Kardinalzahl analog zur FIG 1 belegt.

Da der erste Port 30 des ersten Ressourcenobjektes 1 der selben Kategorie angehört wie der erste Port 60 des zweiten Ressourcenobjektes 3 und der erste Port 30 des ersten Ressourcenobjektes 1 ein Eingang ist und der erste Port 60 des zweiten Objektes 3 ein Ausgang, erkennt das System, dass diese beiden Ports 30, 60 zum gemeinsamen Datenaustausch vorgesehen sind. Ähnlich verhält es sich mit den jeweiligen zweiten Ports 41, 71 die ebenfalls der selben Kategorie angehören, wobei der zweite Port 41 des ersten Ressourcenobjektes 1 ein Ausgang ist und der zweite Port 71 des zweiten Ressourcenobjektes 3 ein Eingang ist.

Das Engineeringsystem kann also aufgrund der Portdaten 31, 41, 61, 71 unter einer Vielzahl von Ressourcenobjekten das zweite Ressourcenobjekt 3 identifizieren, um es mit dem ersten Ressourcenobjekt 1 wie zuvor beschrieben zwecks Werteaustausch datentechnisch zu verbinden. Darüber hinaus kann das Engineeringsystem nunmehr die Programmfragmente 2, 4 des ersten und zweiten Ressourcenobjektes 1, 3 in ein Simulationsprogramm integrieren, welches unter anderem die Interaktion der den beiden Ressourcenobjekten 1, 3 zugeordneten Komponenten nachbildet.

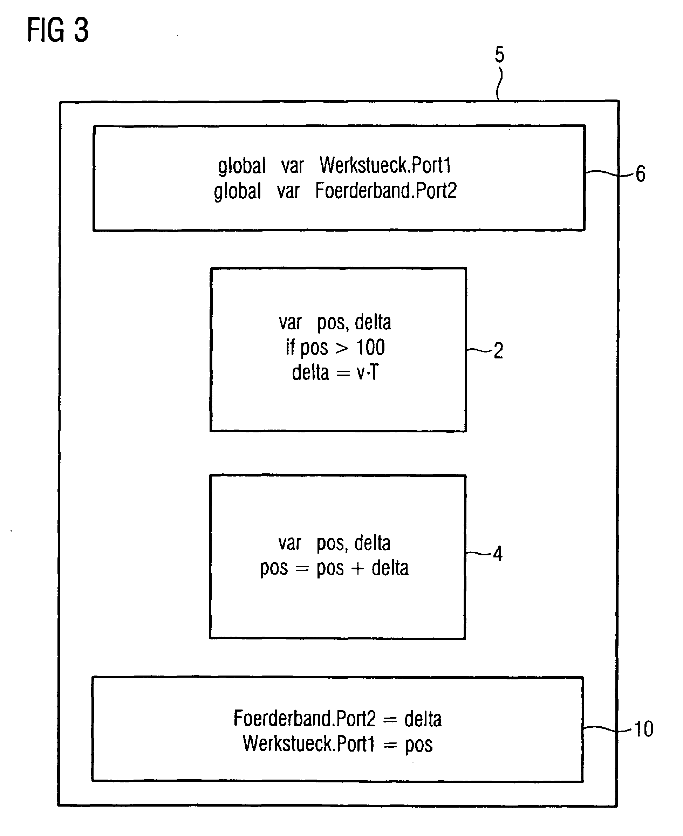

FIG 3 zeigt eine Prinzipdarstellung eines Simulationsprogramms 5 zur Simulation der ersten und zweiten Komponente der Automatisierungsanlage. Nachdem nun die beiden Ressourcenobjekte 1, 3 identifiziert wurden, wurden die zugehörigen Programmfragmente 2, 4 in das Simulationsprogramm 5 integriert. Darüber hinaus wurden zwei globale Variablen 6 definiert, die mit den von den Programmfragmenten 2, 4 berechneten Werten belegt werden können. Die in den Programmfragmenten 2, 4 verwendeten lokalen Variablen delta und pos werden schließlich in einem dritten Zuweisungsfenster 10 auf diese global definierten Variablen gemapt.

Die Bezeichnung der globalen Variablen 6 geschieht nach einem gewissen Automatismus. Dieser Automatismus stellt sicher, dass keine Doppelbenennung stattfinden und der Ursprung der globalen Variablen, d.h. der Port, an dem der Wert ausgegeben wurde, identifizierbar ist. So lässt sich anhand des Namens der globalen Variablen das Ressourcenobjekt identifizieren, an dessen Port der zugehörige Wert als Ausgangswert erscheint und schließlich besagt der Port selbst. D.h., die globale Variable Werkstueck.Port1 wird mit den Werten des ersten Ports 61 des zweiten Ressourcenobjektes 3 belegt, da das zweite Ressourcenobjekt 3 dem Werkstück zugeordnet ist. Analog wird die globale Variable Foerderband.Port2 mit dem Wert am zweiten Port 40 des ersten Ressourcenobjektes 1 belegt, da das erste Ressourcenobjekt dem Förderband zugeordnet ist.

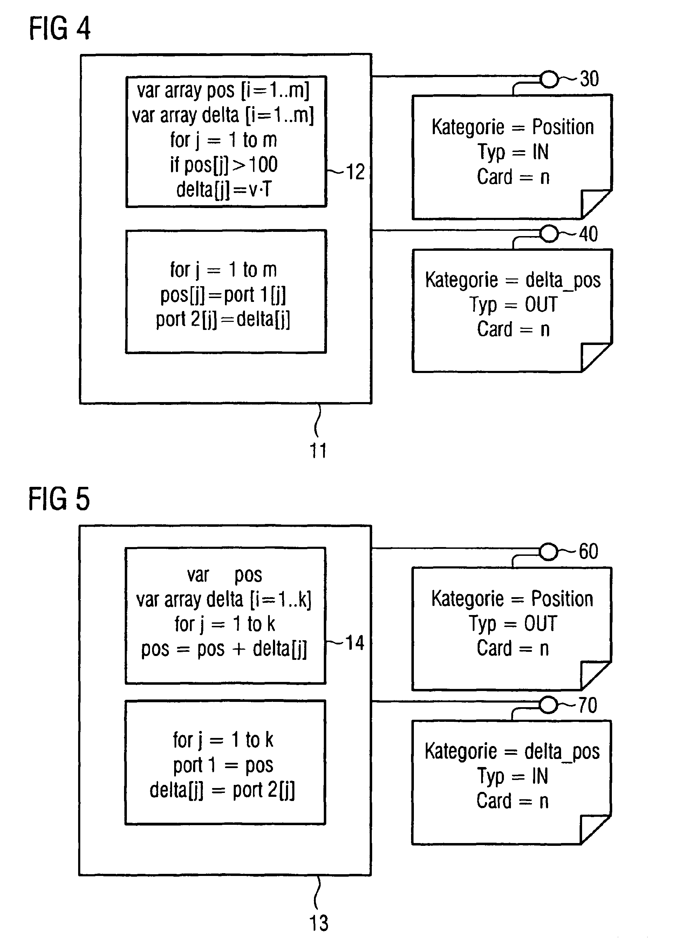

FIG 4 zeigt eine schematische Darstellung eines dritten in einem Engineeringsystem definierten Ressourcenobjektes 11, das einer dritten Komponente der zu simulierenden Automatisierungsanlage zugeordnet ist. Das dritte Ressourcenobjekt 11 ist wie das erste Ressourcenobjekt 1 aus FIG 1 einem Förderband zugeordnet. Bei der Implementierung des dritten Ressourcenobjektes 11 ist jedoch berücksichtigt worden, dass das Förderband mehr als ein Werkstück transportieren kann. Folglich kann das zugehörige Verhaltensmodell auch die Wegstreckenänderung mehrerer Werkstücke berechnen.

In einem Programmfragment 12 des dritten Ressourcenobjektes 11 wird die Wegstrecke jedes Werkstücks analog zu der bezüglich FIG 1 beschriebenen Vorgehensweise berechnet. Um dies für jedes der Werkstücke durchführen zu können, wird ein Array sowohl für die Position als auch für die zurückgelegte Wegstrecke delta definiert, wobei jedes Array m Einträge besitzt und m die Anzahl der von dem Förderband zu transportierenden Werkstücke bezeichnet.

Durch die Verwendung eines Arrays als Variablentyp wird ermöglicht, innerhalb eines Simulationszykluses die zurückgelegte Wegstrecke aller m Werkstücke zu berechnen und zu speichern. Nach Ausführung des dritten Programmfragmentes 12 ist somit für jedes Werkstück j der Ausgangsposition pos[j] ein delta[j] auslesbar, wobei gilt mit j=1..m.

FIG 5 zeigt eine schematische Darstellung eines vierten in einem Engineeringsystem definierten Ressourcenobjektes 13, das einer vierten Komponente der zu simulierenden Automatisierungsanlage zugeordnet ist. Das vierte Ressourcenobjekt 13 ist analog zu dem zweiten Ressourcenobjekt aus FIG 2 einem Werkstück zugeordnet. Bei der Definition des vierten Ressourcenobjektes 13 ist jedoch der Fall betrachtet worden, dass das zugehörige Werkstück von mehreren Förderbändern der Anzahl k bewegt werden kann. Aufgrund dessen ist die Wegstrecke delta auch hier in Form eines Arrays definiert worden, denn die neue Position berechnet sich aus den inkrementellen Anteilen aller k Förderbänder.

Da das vierte Ressourcenobjekt 13 genau einem Werkstück zugeordnet ist, das auch nur genau eine Position einnehmen kann, ist die Position pos als skalare Variable definiert.

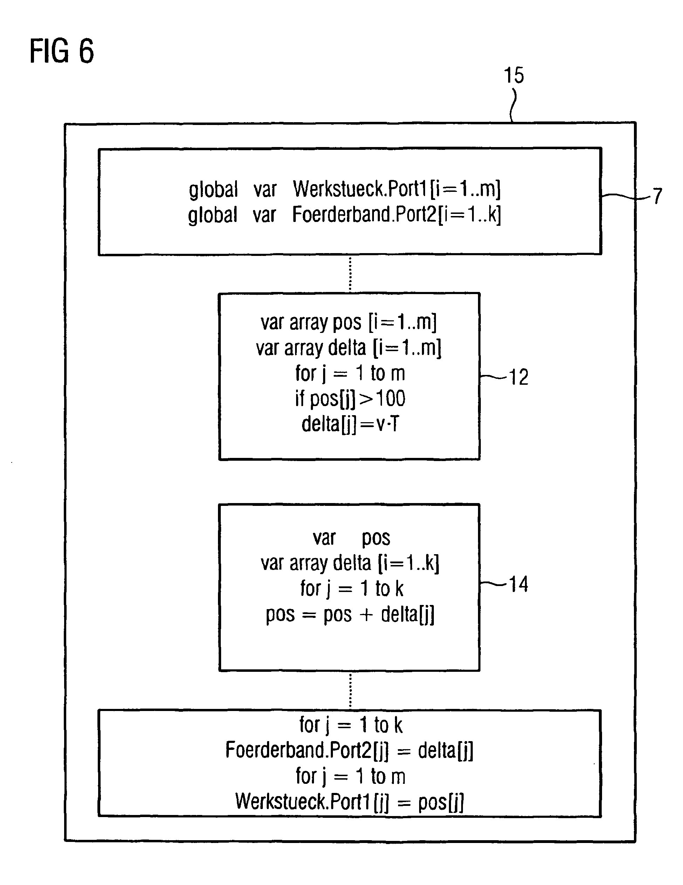

FIG 6 zeigt eine Prinzipdarstellung eines weiteren Simulationsprogramms 15 zur Simulation der Automatisierungsanlage.

Die Integration der Programmfragmente 12, 14 des dritten und vierten Ressourcenobjektes 11, 13 geschieht analog zu der in FIG 3 dargestellten Vorgehensweise. Neben den explizit dargestellten Programmfragmenten 12,14 des dritten und vierten Ressourcenobjektes 11,13 sind die Programmfragmente der übrigen k Förderbänder und m Werkstücke in das fertige Simulationsprogramm 15 integriert.

Um den Datenaustausch all dieser Programmfragmente 12,14 zu ermöglichen, werden global definierte Arrays 7 Werkstueck.Port1 und Foerderband.Port2 deklariert. Die Wahl der Bezeichner geschieht analog zu der bereits unter FIG 3 erläuterten Vorgehensweise. In den global definierten Arrays können die innerhalb eines Simulationszykluses auszutauschenden und von den Programmfragmenten berechneten Ausgangswerte abgelegt werden, ohne das diese während des besagten Zykluses überschrieben werden können.

Das mit den Figuren 4 bis 6 beschriebene Ausführungsbeispiel zeigt, dass die Erfindung eine sehr viel übersichtlichere Verknüpfung einzelner Verhaltensmodelle zur Simulation der Automatisierungsanlage erlaubt, als dies im Stand der Technik der Fall wäre. Gemäß dem Stand der Technik müssten in einer grafischen Benutzeroberfläche die Ports sämtlicher Werkstückressourcen mit den Ports sämtlicher Förderbänder verbunden werden, die am Transport der Werkstücke beteiligt sind. Es ist offensichtlich, dass die Fehlergefahr hierbei sehr hoch ist und eine sehr unübersichtliche Repräsentation des Anlagenmodells entsteht. Diese Nachteile werden mit der Erfindung effizient beseitigt. Ferner ermöglicht die Erfindung eine dynamische Instanziierung während des Simulationsablaufes. Beispielsweise können während der Simulation neue Instanzen eines Typs Werkstück erzeugt werden, dem das vierte Ressourcenobjekt 13 zugeordnet ist.

## Patentansprüche

1. System zur Erstellung eines Simulationsprogramms (5) zur Simulation einer Automatisierungsanlage mit
- Mitteln zur Definition jeweils eines Ressourcenobjektes (1,3) für mindestens zwei Komponenten der Automatisierungsanlage, wobei jedem dieser Ressourcenobjekte (1,3) ein Programmfragment (2,4) mit Computerprogrammcode zur Simulation der Funktionalität der zugehörigen Komponente zugeordnet ist und wobei jedes dieser Ressourcenobjekte (1,3) mindestens einen Port (30,40) aufweist, dessen Wert durch das Programmfragment (2,4) des zugehörigen Ressourcenobjektes (1,2) belegt und/oder eingelesen werden kann,
- Mitteln zur Definition von Portdaten (31,41,61,71) zu jedem Port (30,40,60,70), die Eigenschaften der am zugehörigen Port (30,40,60,70) austauschbarer Werte definieren wobei die Portdaten (31,41,61,71) den jeweiligen zugehörigen Port (30,40,60,70) als Eingangsport oder Ausgangsport kennzeichnen,
- Mitteln zur Identifikation eines ersten Ports (30) eines ersten Ressourcenobjekte (1), der zum Austausch von Werten mit einem zweiten Port (60) eines zweiten Ressourcenobjektes (3) vorgesehen ist, auf Basis der dem ersten und zweiten Port (30,60) zugehörigen Portdaten (31,61),
- Mitteln zur Definition genau einer Variablen, die mit den zwischen dem ersten und zweiten Port (30,60) auszutauschenden Werten belegt werden kann und
- Mitteln zur Integration der dem ersten und zweiten Ressourcenobjekt (1,3) zugeordneten Programmfragmente (2,4) in das Simulationsprogramm (5) und zur Belegung der Variablen mit den zwischen dem ersten und zweiten Port (30,60) auszutauschenden Werten
**gekennzeichnet durch**
Mittel zur Instanziierung der Ressourcenobjekte (1,3), die eine Bildung von Instanzen der Ressourcenobjekte (1,3) zur Laufzeit des Simulationsprogramms (5) ermöglichen.

2. System nach Anspruch 1,
wobei die Variable eine globale Variable (6) ist.

3. System nach Anspruch 1,
wobei die Variable ein global definiertes Array (7) ist.

4. System nach Anspruch 1,
wobei die Variable ein Pointer ist.

5. System nach Anspruch 1,
wobei die Variable eine Liste ist.

6. System nach einem der vorgehenden Ansprüche,
wobei das System Mittel zur automatischen Vergabe einer eindeutigen Bezeichnung für die Variable umfasst, die derart gestaltet ist, dass sie das Ressourcenobjekt (1,3) kennzeichnet, das die Variable mit Werten belegt, und den Port (30,40,60,70) kennzeichnet, an dem das Ressourcenobjekt (1,3) den Wert ausgibt.

7. System nach einem der vorgehenden Ansprüche,
wobei die Portdaten (31,41,61,71) die maximale Anzahl weiterer Ports (30,40,60,70) kennzeichnen, mit denen ein den Portdaten zugehöriger Port (31,41,61,71) Werte austauschen kann.

8. System nach einem der vorhergehenden Ansprüche,
wobei das System als Engineeringsystem ausgeführt ist.

## Claims

1. System for creating a simulation program (5) for simulation of an automation installation with
- means for definition of a respective resource object (1, 3) for at least two components of the automation installation, with each of these resource objects (1, 3) being assigned a program fragment (2, 4) with computer program code for simulation of the functionality of the associated component and with each of these resource objects (1, 3) having at least one port (30, 40) whose value can be given and/or read in by the program fragment (2, 4) of the associated resource object (1, 2),
- means for definition of port data (31, 41, 61, 71) for each port (30, 40, 60, 70), which defines properties of the values able to be interchanged at the associated port (30, 40, 60, 70), with the port data (31, 41, 61, 71) identifying the respective associated port (30, 40, 60, 70) as an input port or output port,
- means for identification of a first port (30) of a first resource object (1) which is provided for interchange of values with a second port (60) of a second resource object (3) on the basis of the port data (31, 61) belonging to the first and the second port (30, 60),
- means for definition of one single variable that can be occupied by the values to be interchanged between the first and second port (30, 60) and
- means for integration of the program fragments (2, 4) assigned to the first and second resource object (1, 3) into the simulation program (5) and for occupying the variables with the values to be interchanged between the first and second port (30, 60).
**characterised by**
means for instantiating the resource objects (1, 3) which make it possible to form instances of the resource objects (1, 3) at the runtime of the simulation program (5).

2. System according to claim 1,
with the variable being a global variable (6).

3. System according to claim 1,
with the variable being a globally-defined array (7).

4. System according to claim 1,
with the variable being a pointer.

5. System according to claim 1,
with the variable being a list.

6. System according to one of the preceding claims,
with the system comprising means for automatically issuing a unique name for the variable which is designed such that it identifies the resource object (1, 3) which gives the variable values, and identifies the port (30, 40, 60, 70) at which the resource object (1, 3) outputs the value.

7. System according to one of the preceding claims,
with the port data (31, 41, 61, 71) identifying the maximum number of further ports (30, 40, 60, 70) with which a port associated with the port data (31, 41, 61, 71) can exchange values.

8. System according to one of the preceding claims,
with the system being designed as an engineering system.

## Revendications

1. Système d'établissement d'un programme de simulation (5) pour simuler une installation d'automatisation, avec :
- des moyens pour définir respectivement un objet de ressources (1, 3) pour au moins deux composants de l'installation d'automatisation, à chacun de ces objets de ressources (1, 3) étant associé un fragment de programme (2, 4) avec code de programme informatique pour simuler la fonctionnalité du composant associé et chacun de ces objets de ressources (1, 3) comportant au moins un port (30, 40) dont la valeur peut être occupée et/ou lue par le fragment de programme (2, 4) de l'objet de ressources associé (1, 2) ;
- des moyens pour définir des données de ports (31, 41, 61, 71) pour chaque port (30, 40, 60, 70), lesquels définissent des caractéristiques des valeurs échangeables au niveau du port associé (30, 40, 60, 70), les données de ports (31, 41, 61, 71) caractérisant le port associé respectif (30, 40, 60, 70) en tant que port d'entrée ou port de sortie ;
- des moyens pour identifier, sur la base des données de ports (31, 61) associées aux premier et deuxième ports (30, 60), un premier port (30) d'un premier objet de ressources (1) qui est prévu pour échanger des valeurs avec un deuxième port (60) d'un deuxième objet de ressources (3) ;
- des moyens pour définir exactement une variable qui peut être occupée avec les valeurs à échanger entre les premier et deuxième ports (30, 60) ; et
- des moyens pour intégrer au programme de simulation (5) les fragments de programme (2, 4) associés aux premier et deuxième objets de ressources (1, 3) et pour occuper les variables avec les valeurs à échanger entre les premier et deuxième ports (30, 60) ;
**caractérisé par** des moyens pour instancier les objets de ressources (1, 3) qui permettent une formation d'instances des objets de ressources (1, 3) pendant la durée de marche du programme de simulation (5).

2. Système selon la revendication 1, la variable étant une variable globale (6).

3. Système selon la revendication 1, la variable étant un array globalement défini (7).

4. Système selon la revendication 1, la variable étant un pointeur.

5. Système selon la revendication 1, la variable étant une liste.

6. Système selon l'une des revendications précédentes, le système comprenant des moyens pour attribuer automatiquement une désignation univoque pour la variable, laquelle se présente de manière telle qu'elle caractérise l'objet de ressources (1, 3) qui occupe la variable avec des valeurs et qu'elle caractérise le port (30, 40, 60, 70) au niveau duquel l'objet de ressources (1, 3) produit la valeur en sortie.

7. Système selon l'une des revendications précédentes, les données de ports (31, 41, 61, 71) caractérisant le nombre maximal d'autres ports (30, 40, 60, 70) avec lesquels un port (31, 41, 61, 71) associé aux données de ports peut échanger des valeurs.

8. Système selon l'une des revendications précédentes, le système se présentant sous la forme d'un système d'ingénierie.
